# EUROPÄISCHE PATENTANMELDUNG

(11) **EP 4 342 686 A1**
(43) Veröffentlichungstag der Anmeldung: **27.03.2024**
(21) Anmeldenummer: 23196143.4
(22) Anmeldetag: 08.09.2023
(51) Int. Cl.: B60C 11/03, B60C 11/12

(54) **FAHRZEUGREIFEN**

(30) Priorität: 26.09.2022 DE 102022210140
(71) Anmelder: Continental Reifen Deutschland GmbH, 30175 Hannover (DE)
(72) Erfinder: Bauer, Claudia, 30165 Hannover (DE); Milchers, Wolfgang, 30165 Hannover (DE); Behr, Ulrich, 30165 Hannover (DE); Rahn, Tobias, 30165 Hannover (DE); Nette, Daniel, 30165 Hannover (DE); Kaldune, Norman, 30165 Hannover (DE)
(74) Vertreter: Continental Corporation

(57) **Zusammenfassung**

Fahrzeugreifen mit einem ersten schulterseitigen Profilband und wenigstens einem mittleren Profilband, wobei das erste schulterseitige Profilband aus in Umfangsrichtung aufeinanderfolgenden schulterseitigen Umfangsabschnitten besteht und wobei das mittlere Profilband aus in Umfangsrichtung aufeinanderfolgenden mittleren Umfangsabschnitten besteht, wobei in jedem Umfangsabschnitt wenigstens ein Hauptnegativelement ausgebildet ist, wobei jedes Hauptnegativelement einen langgestreckten Verlauf mit Quererstreckungsanteil aufweist, wobei das erste schulterseitige Profilband entlang einer ersten imaginären geschlossenen Umfangslinie mehr Hauptnegativelemente umfasst als das mittlere Profilband entlang einer zweiten imaginären geschlossenen Umfangslinie.

Ein erster schulterseitiger Umfangsabschnitt umfasst ein erstes und ein zweites schulterseitiges Hauptnegativelement, wobei sich das erste schulterseitige Hauptnegativelement axial von außen kommend weiter in eine Bodenaufstandsfläche des Fahrzeugreifens hinein erstreckt als das zweite schulterseitige Hauptnegativelement und wobei das erste und das zweite schulterseitige Hauptnegativelement zusammen wenigstens 85% eines Gesamtnegativvolumens des ersten schulterseitigen Umfangabschnitts im Bereich der Bodenaufstandsfläche ausmachen.

## Beschreibung

Die Erfindung betrifft einen Fahrzeugreifen mit einem ersten schulterseitigen Profilband und wenigstens einem mittleren Profilband, wobei das erste schulterseitige Profilband aus in Umfangsrichtung aufeinanderfolgenden schulterseitigen Umfangsabschnitten besteht und wobei das mittlere Profilband aus in Umfangsrichtung aufeinanderfolgenden mittleren Umfangsabschnitten besteht, wobei in jedem Umfangsabschnitt wenigstens ein Hauptnegativelement ausgebildet ist, wobei jedes Hauptnegativelement einen langgestreckten Verlauf mit Quererstreckungsanteil aufweist, wobei das erste schulterseitige Profilband entlang einer ersten imaginären geschlossenen Umfangslinie mehr Hauptnegativelemente umfasst als das mittlere Profilband entlang einer zweiten imaginären geschlossenen Umfangslinie.

Reifenprofile unterscheiden sich unter anderem durch die Größe eines Negativvolumens, oft auch als Void bezeichnet, voneinander. Ein hohes Negativvolumen ist generell vorteilhaft für das Verhalten des Fahrzeugreifens bei Nässe, beispielsweise, um Aquaplaning zu verhindern. Andererseits ist ein geringes Negativvolumen vorteilhaft, um eine Geräuschentwicklung am Fahrzeugreifen gering zu halten. Diesbezüglich stellen beispielsweise gesetzliche Geräuschlimits, insbesondere in Bezug auf die Geräuschentwicklung unter Beschleunigung, neue Herausforderungen an die Reifenentwicklung. Ein weiterer potenzieller Nachteil eines hohen Negativvolumens kann, je nach Anordnung von Rillen und Einschnitten in einem Reifen, auch eine verringerte Fahrstabilität und Verschlechterung der strukturellen Integrität des Fahrzeugreifens sein. Trotz vielfältiger Bemühungen in der Vergangenheit bleibt es daher eine Herausforderung, Reifenprofile zu schaffen, die sowohl möglichst stabil und leise als auch möglichst gut geeignet für nasse Fahrbahnen sind.

DE 11 2018 007 605 T5 beschreibt einen Fahrzeugluftreifen mit reduziertem Reifengeräusch, reduziertem Rollwiderstand und verbesserter Lenkstabilität. Gemäß einer Ausführungsform wird ein Laufflächenmuster vorgestellt, das in einem Schulterbereich in Querrichtung verlaufende Stollenrillen und in einem mittleren Bereich geneigte Rillen aufweist, wobei die Stollenrillen des Schulterbereichs in Umfangsrichtung in kleineren Abständen aufeinanderfolgen als die geneigten Rillen des mittleren Bereichs.

Der Erfindung liegt die Aufgabe zugrunde, bei der Begrenzung eines Geräuschpegels sowie bei der Gestaltung eines Geräuschspektrums gegenüber dem Stand der Technik Verbesserungen zu erzielen, ohne dabei die Nasseigenschaften des Fahrzeugreifens zu verschlechtern. Insbesondere soll der Zielkonflikt für ein Profil mit insgesamt geringem Negativvolumen auf hohem Niveau gelöst werden.

Die gestellte Aufgabe wird erfindungsgemäß dadurch gelöst, dass ein erster schulterseitiger Umfangsabschnitt ein erstes und ein zweites schulterseitiges Hauptnegativelement umfasst, wobei sich das erste schulterseitige Hauptnegativelement axial von außen kommend weiter in eine Bodenaufstandsfläche des Fahrzeugreifens hinein erstreckt als das zweite schulterseitige Hauptnegativelement und wobei das erste und das zweite schulterseitige Hauptnegativelement zusammen wenigstens 85% eines Gesamtnegativvolumens des ersten schulterseitigen Umfangsabschnitts im Bereich der Bodenaufstandsfläche ausmachen.

Die Erfindung findet eine komplexe und synergetisch wirkende Kombination von Profilmerkmalen mit vorteilhaften Effekten bei Stabilität und Geräuschentwicklung auf der einen Seite und Ausleiten von Wasser auf der anderen Seite. Durch eine in Umfangsrichtung gesehen hohe Anzahldichte an Hauptnegativelementen im Schulterbereich kann ein gegebenes Negativvolumen an der Schulter auf viele in Umfangsrichtung schmale Hauptnegativelemente verteilt werden, wobei schmale Hauptnegativelemente, insbesondere bei konstanter Fahrgeschwindigkeit, zuträglich für eine Begrenzung der Geräuschentwicklung sind. Weiterhin wird durch die Konzentration des Negativvolumens auf die ersten und zweiten Hauptnegativelemente und den damit einhergehenden weitgehenden Verzicht auf zusätzliche Elemente wie Einschnitte in der Schulter eine besonders effiziente Wasserausleitung gewährleistet. Durch die AB-Struktur an der Schulter wird dabei abwechselnd ein Schwerpunkt auf eine geringe Geräuschentwicklung und ein effektives Ausleiten von Wasser gesetzt. Darüber hinaus stellt sich durch die AB-Struktur eine Verbreiterung des Frequenzspektrums ein, die den verbreiternden Effekt der Asymmetrie zwischen schulterseitigem Profilband und mittlerem Profilband zusätzlich verstärkt. Insgesamt stellt sich heraus, dass die erfindungsgemäße Anordnung zu guten Ergebnissen im Nasshandling bei gleichzeitiger Begrenzung einer Geräuschentwicklung und ohne Abstriche bei der Fahrstabilität führt.

Die Richtungsbezeichnungen axial, in Axialrichtung, radial, in Radialrichtung und in Umfangsrichtung beziehen sich auf den bestimmungsgemäß an einem Fahrzeug angebrachten Fahrzeugreifen und seine daran vollzogene Rollbewegung. Hierbei bezeichnet die Umfangsrichtung die Richtung einer Rollbewegung um die Rotationsachse. Die Radialrichtung bezieht sich auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Fahrzeugreifens verlaufen. Die Basisfläche fällt zusammen mit jener glatten Oberfläche, welche der Fahrzeugreifen aufweisen würde, wenn keinerlei negative Profilelemente, wie etwa Rillen vorgesehen wären. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter.

Ein Negativelement hat einen Quererstreckungsanteil, wenn es wenigstens entlang eines Teils seines langgestreckten Verlaufs eine Richtungskomponente in Querrichtung aufweist. Ein langgestreckter Verlauf eines Negativelements ist dann gegeben, wenn lokal senkrecht zu einer auf der Basisfläche verlaufenden Breite und lokal senkrecht zu einer senkrecht auf der Basisfläche stehenden Tiefe des Negativelements ein Pfad auf der Basisfläche verläuft, wobei sich das Negativelement unter dem Pfad erstreckt und wobei der Pfad länger ist als jede Breite und jede Tiefe entlang des Pfades breit bzw. tief ist. Der Pfad kann gerade, gewinkelt und/oder gekrümmt sein. Ein an der Basisfläche kreisförmiges und insgesamt muldenförmiges Profilelement hat beispielsweise keinen langgestreckten Verlauf, wohingegen eine Rille typischerweise einen langgestreckten Verlauf aufweist. Eine Quer- oder Schrägrille oder ein entsprechender Einschnitt sind typische Beispiele für Negativelemente mit langgestrecktem Verlauf mit Quererstreckungsanteil.

Ein Negativelement ist eine Profilelement, entlang dem eine Oberfläche des Fahrzeugreifens in Richtung des Reifeninneren von der Basisfläche abweicht. Typische Beispiele für Negativelemente sind Rillen, Einschnitte, Nuten und muldenförmige Profilelemente. Ein Hauptnegativelement kann die Erscheinung und/oder die Funktion eines Profils in besonderem Maße prägen. Typische Beispiele für Hauptnegativelemente sind Umfangsrillen, Quer- und Schrägrillen.

Auch Einschnitte können Hauptnegativelemente sein, insbesondere dann, wenn in Umfangsrichtung und/oder Querrichtung an vergleichbaren Positionen keine Rillen mit ähnlichem Verlauf vorgesehen sind. Einschnitte werden auch als Lamellen bezeichnet und haben typischerweise eine geringere Breite als Rillen.

Eine imaginäre geschlossene Umfangslinie ist eine gedankliche Hilfslinie, die exakt in Umfangsrichtung über die Basisfläche des Fahrzeugreifens verläuft und in sich selbst mündet. Ein Negativelement liegt entlang einer imaginären geschlossenen Umfangslinie, wenn die imaginäre geschlossene Umgangslinie einen Pfad auf der Basisfläche kreuzt, unter dem sich das Negativelement erstreckt.

Ein Umfangsabschnitt eines Profilbands kann in Querrichtung von den Rändern des Profilbands begrenzt sein und ist in Umfangsrichtung zu beiden Orientierungen von imaginären Trennlinien gegenüber benachbarten Umfangsabschnitten abgegrenzt. Die imaginären Trennlinien haben Quererstreckungsanteile, erstrecken sich vorzugsweise vollständig zwischen den Rändern des Profilbands und können einen geraden, gewinkelten und/oder gekrümmten Verlauf aufweisen. Verschiedene Umfangsabschnitte können identische Geometrien und/oder Abmessungen aufweisen oder sich voneinander unterschieden. Vorzugsweise sind alle Umfangsabschnitte eines Profilbandes von gleichgeformten Trennlinien begrenzt, sodass die Trennlinien durch Verschieben in Umfangsrichtung ineinander überführt werden könnten. Die Abmessungen in Umfangsrichtung können je nach Umfangsabschnitt variieren; insbesondere kann eine Umfangserstreckung je nach Umfangsabschnitt variieren. Die Umfangserstreckung bezieht sich hierbei vorzugsweise auf den einheitlichen Abstand zweier parallel zueinander verlaufender imaginärer Trennlinien an den Grenzen eines schulterseitigen Umfangsabschnitts. Bei nicht parallel zueinander verlaufenden imaginären Trennlinien kann eine durchschnittliche Umfangserstreckung zwischen den Trennlinien entlang einer Quererstreckung des schulterseitigen Profilblocks ermittelt werden.

Es können Profilelemente entlang der imaginären Trennlinien verlaufen oder diese kreuzen. Vorzugsweise verlaufen die imaginären Trennlinien auf der Basisfläche, abseits von Profilelementen und erstrecken sich insbesondere zwischen zwei oder mehr Profilelementen. Ein beispielhafter Umfangsabschnitt kann von einer ersten und einer zweiten imaginären Trennlinie begrenzt sein, wobei zwei Hauptnegativelemente in dem beispielhaften Umfangsabschnitt ausgebildet sind. Hierbei kann die erste imaginäre Trennlinie zwischen zwei in Umfangsrichtung benachbarten Hauptnegativelementen verlaufen und die zweite Trennlinie zwischen zwei weiteren in Umfangsrichtung benachbarten Hauptnegativelementen verlaufen. In dem beispielhaften Umfangsabschnitt richten sich die Abmessungen dann nach den Abständen in Umfangsrichtung zwischen den Hauptnegativelementen, die wiederum im Rahmen einer sogenannten Pitchfolge entlang der Umfangsrichtung angeordnet sein können. Die gleiche Überlegung gilt analog für Umfangsabschnitte, die nur ein Hauptnegativelement oder mehr als zwei Hauptnegativelemente umfassen.

Die Bodenaufstandsfläche entspricht dem statisch ermittelten Footprint bei einer Last von 70 % der maximalen Tragfähigkeit bei einem Innendruck von 85 %, ermittelt gemäß E.T.R.T.O.-Standards.

Die mit den Merkmalen des Hauptanspruchs erzielten Effekte werden durch bevorzugte Anordnungen und Ausformungen der Hauptnegativelemente sowie Kombination mit zusätzlichen Profilelementen weiter verstärkt und ergänzt.

Vorzugsweise machen das erste und das zweite schulterseitige Hauptnegativelement zusammen wenigstens 95% des Gesamtnegativvolumens des ersten schulterseitigen Umfangabschnitts im Bereich der Bodenaufstandsfläche aus. Hierdurch wird eine Konzentration auf das erste und zweite Hauptnegativelement im Sinne der Effizienz zur Lösung der zugrunde liegenden Aufgabe weiter verstärkt.

Vorzugsweise erfüllen alle schulterseitigen Umfangsabschnitte des ersten schulterseitigen Profilbands die Bedingungen an den ersten schulterseitigen Umfangsabschnitt gemäß dem Hauptanspruch und wahlweise gemäß der vor- und/oder nachstehenden Beschreibung. Verschiedene schulterseitige Umfangsabschnitte müssen dabei im Vergleich zueinander nicht die gleichen Geometrien und/oder Abmessungen aufweisen. Insbesondere variieren vorzugsweise die Abmessungen in Umfangsrichtung zwischen den schulterseitigen Umfangsabschnitten im Rahmen einer geeigneten Pitchfolge. Pitchfolgen beschreiben entlang der Umfangsrichtung vorgesehene Variationen der Abstände zwischen Profilelementen und werden zur Verbreiterung eines Geräuschspektrums eingesetzt; eine geeignete Pitchfolge kann folglich die erfindungsgemäßen Maßnahmen zur Verbreiterung des Geräuschspektrums gewinnbringend ergänzen.

Die beiden schulterseitigen Hauptnegativelemente können in Umfangsrichtung zwischen 30% und 70%, vorzugsweise zwischen 40% und 60% einer Umfangserstreckung des ersten schulterseitigen Umfangsabschnitts voneinander beabstandet sein. Auf diese Weise lässt sich durch Aneinanderreihen von schulterseitigen Umfangsabschnitten in Umfangsrichtung eine im Wesentlichen regelmäßige Abfolge von Hauptnegativelementen erzielen, die lediglich im Rahmen einer geeigneten Pitchfolge variieren kann.

Vorzugsweise verlaufen das erste und zweite Hauptnegativelement in ihrem langgestreckten Verlauf jeweils im Wesentlichen in einem Winkel zwischen 70° und 90° zur Umfangsrichtung. Der Winkel kann sich hierbei zu beiden Orientierungen der Umfangsrichtung öffnen, sodass in dem oben angegebenen Winkelbereich beispielsweise ein Winkel von 70° gleichbedeutend mit einem Winkel von 110° wäre. Im Rahmen einer solche, vornehmlich in Querrichtung verlaufenden Erstreckung der Hauptnegativelemente kann ein für die Geräuschentwicklungsbegrenzung vorteilhaft steiler Winkel gegenüber einer Kontur der Bodenaufstandsfläche eingestellt werden, die wiederum im Bereich des schulterseitigen Profilbands teilweise in Umfangsrichtung verläuft.

Ein im Wesentlichen in einer ersten Richtung verlaufendes Negativelement, wie beispielsweise eine Rille oder ein Einschnitt, kann durch eine in der ersten Richtung verlaufende Gerade beschrieben sein, wobei die Gerade eine Regressionsgerade durch eine Punktwolke aus allen zu dem Negativelement gehörenden Punkten sein kann. Die zu einem Negativelement gehörenden Punkte können ein zwischen der Basisfläche und der physischen Oberfläche des Fahrzeugreifens liegendes Volumen ausfüllen, wobei jeder Punkt einen verschwindenden Abstand zu wenigstens einem weiteren Punkt aus der Punktwolke des Negativelements hat. Ein Pfad auf der Basisfläche, unter dem sich das Negativelement erstreckt, kann parallel zu der Geraden verlaufen und/oder sich durch Krümmungen und/oder Knicke von der Geraden entfernen bzw. sich an diese annähern. Der Abstand des Pfads zu der Geraden beträgt vorzugsweise weniger als 50%, weiter vorzugsweise weniger als 10% des größten Abstands zwischen zwei innerhalb der Bodenaufstandsfläche gelegenen Punkten in dem Profilelement.

Ein beispielhaftes Hauptnegativelement kann aus einer in 90° zur Umfangsrichtung verlaufenden Querrille und einer daran angeschlossenen, in Umfangsrichtung abgewinkelte Entwässerungsnut bestehen. Wenn die Entwässerungsnut kürzer und/oder flacher als die Querrille ist, kann das beispielhafte Hauptnegativelement trotz der in Umfangsrichtung verlaufenden Entwässerungsnut insgesamt im Wesentlichen in einem Winkel von wenigstens 70° zur Umfangsrichtung verlaufen, weil die Anzahl der Punkte aus der tieferen und/oder längeren Querrille die Anzahl der Punkte aus der Entwässerungsnut überwiegen und somit die Richtung der Regressionsgeraden entsprechend dominieren kann. Für das beispielhafte Hauptnegativelement kann ein Pfad auf der Basisfläche, unter dem sich das Hauptnegativelement erstreckt, eine L-Form annehmen, wobei am Winkelpunkt und an den Spitzen der L-Form Maxima im Abstand zu der Regressionsgeraden bestehen.

Die ersten und zweiten Hauptnegativelemente in dem schulterseitigen Profilband sind vorzugsweise Quer- und/oder Schrägrillen und/oder bestehen aus Kombinationen von Quer- und/oder Schrägrillen mit weiteren Profilelementen. Typische Quer- oder Schrägrillen können eine Breite von 1,5 mm bis 10 mm, vorzugsweise eine Breite von 2 mm bis 5 mm aufweisen und eine maximale Tiefe zwischen 3 mm und einer vollen Profiltiefe des Profils aufweisen, wobei die volle Profiltiefe üblicherweise in einer Umfangsrille erreicht wird.

Es können imaginäre Projektionen der in dem mittleren Profilband ausgebildeten Hauptnegativelemente auf zwischen der Axialrichtung und der Radialrichtung aufgespannte Flächen betrachtet werden. Eine Projektion der Punkte aus einem Hauptnegativelement erfolgt dabei für jeden Punkt in Umfangsrichtung. Durch die Projektion wird ein Maß dafür gefunden, zu welchem Grad das mittlere Profilband, ungeachtet der Breite eines Hauptnegativelements, von dem Hauptnegativelement in Umfangsrichtung unterbrochen wird. Vorzugsweise unterscheiden sich die Flächeninhalte der Projektionen aller entlang der zweiten imaginären geschlossenen Umfangslinie gelegenen Hauptnegativelemente untereinander um weniger als 34%. Wenn sich zwei Flächeninhalte von Projektionen entlang der zweiten imaginären geschlossenen Umfangslinie gelegener Negativelemente um 34% oder mehr voneinander unterscheiden, dann ist das mit dem kleineren Flächeninhalt assoziierte Negativelement vorzugsweise nicht als Hauptnegativelement zu werten. Der Unterschied bemisst sich hierbei an einem gleichgroßen oder größeren Flächeninhalt, sodass ein Negativelement, dessen Projektion einen Flächeninhalt von 66% des Flächeninhalts der Projektion eines Hauptnegativelements aufweist, gerade nicht mehr als Hauptnegativelement zu werten wäre. Hierdurch kann die im Hauptanspruch kodifizierte, die Anzahl der Hauptnegativelemente betreffende Asymmetrie zwischen dem schulterseitigen Profilband und dem mittleren Profilband noch robuster ausgestaltet werden.

Vorzugsweise umfasst das mittlere Profilband entlang der zweiten imaginären geschlossenen Umfangslinie wenigstens ein Hauptnegativelement, weiter vorzugsweise in Abständen von höchstens 12° jeweils wenigstens ein Hauptnegativelement. Hierdurch wird erstens ein sinnvoller Verlauf der zweiten imaginären geschlossenen Umfangslinie definiert und zweitens kann ein sinnvolles Mindestmaß an Unterbrechungen des mittleren Profilbands in Umfangsrichtung gefunden werden.

Die in dem mittleren Profilband ausgebildeten Hauptnegativelemente erstrecken sich in ihrem langgestreckten Verlauf vorzugsweise jeweils im Wesentlichen in einem Winkel von maximal 50° zur Umfangsrichtung. Durch eine zu großen Anteilen in Umfangsrichtung verlaufende Erstreckung der Hauptnegativelemente kann ein für die Geräuschentwicklungsbegrenzung vorteilhafter Winkel gegenüber der im Bereich des mittleren Profilbands im Wesentlichen in Querrichtung verlaufenden Kontur der Bodenaufstandsfläche erzielt werden. Weiterhin können die Hauptnegativelemente bei gleichem Negativvolumen und gleichem Quererstreckungsanteil der Hauptnegativelemente umso schmaler gestaltet werden, je kleiner der Winkel ihres Verlaufs gegenüber der Umfangsrichtung ist; hierbei können sich schmale Negativelemente positiv auf die Geräuschentwicklungsbegrenzung auswirken.

Auf dem schulterseitigen Profilband und/oder auf dem mittleren Profilband können Oberflächenelemente ausgebildet sein, wobei die Oberflächenelemente eine Tiefe von maximal 2,5 mm aufweisen können. Die Oberflächenelemente verlaufen vorzugsweise in ihrer Gesamtheit unter einem Winkel von maximal 50° zur Umfangsrichtung. Ob eine Gruppe von Oberflächenelementen in Gesamtheit unter einem gewissen Winkel verläuft, kann anhand eines Integrals über alle Pfade, unter denen sich die Oberflächenelemente der Gruppe erstrecken, bestimmt werden: Wenn die mit dem Integral aufsummierten Richtungskomponenten einen in eine mit dem gewissen Winkel assoziierte Richtung zeigenden Vektor beschreiben, verläuft die Gruppe in ihrer Gesamtheit unter dem gewissen Winkel. Beispielsweise verlaufen ein in Umfangsrichtung ausgerichtetes Oberflächenelement mit vergleichsweise längerem langgestrecktem Verlauf und ein in Querrichtung ausgerichtetes Oberflächenelement mit vergleichsweise kürzerem langgestrecktem Verlauf in ihrer Gesamtheit in einem Winkel von weniger als 45° zur Umfangsrichtung. Solche Oberflächenelemente tragen vergleichsweise wenig zum Gesamtnegativvolumen bei, können aber für die Nasseigenschaften des Reifens von großem Vorteil sein. Ein Oberflächenelement kann mit einem Hauptnegativelement verbunden sein und kann wahlweise auch als Bestandteil eines Negativelements behandelt werden, beispielsweise im Fall einer Querrille mit einer daran anschließenden, abgewinkelten Entwässerungsnut.

In einer Ausführungsform der Erfindung schließen an die schulterseitigen Hauptnegativelemente axial innerhalb Entwässerungsnuten an und sind in einer Weise abgewinkelt, dass die Entwässerungsnuten jeweils unter einem Pfad verlaufen, der näher an der Umfangsrichtung gelegen ist als derjenige Pfad, unter dem das jeweils angeschlossene Hauptnegativelement bzw. der restliche Bestandteil des die Entwässerungsnut umfassenden Hauptnegativelements verläuft. In einer bevorzugten Ausführungsform schließen die beschriebenen Entwässerungsnuten an alle ersten schulterseitigen Hauptnegativelemente, nicht aber an zweite schulterseitige Hauptnegativelemente an. In einer bevorzugten Ausführungsform sind die Entwässerungsnuten, wo sie an schulterseitige Hauptnegativelemente angeschlossen sind, alle zu der gleichen Orientierung hin in der beschriebenen Weise abgewinkelt.

Das mittlere Profilband ist vorzugsweise axial von wenigstens einer Umfangsrille begrenzt. Hierbei kann wenigstens ein in dem mittleren Profilband ausgebildetes Oberflächenelement seitlich in die Umfangsrille münden und vorzugsweise in seiner Breite mit zunehmendem Abstand von der Umfangsrille abnehmen. Hierdurch kann eine besonders effektive Entwässerung in die Umfangsrille erreicht werden.

Ein oder mehrere der in dem mittleren Profilband ausgebildeten Oberflächenelemente können mit jeweils einem Hauptnegativelement gepaart sein und können wahlweise als Teil des betreffenden Hauptnegativelements behandelt werden. Hierbei kann das Oberflächenelement entlang wenigstens eines Teils des langgestreckten Verlaufs des Hauptnegativelements im Wesentlichen parallel zu diesem verlaufend mit dem Hauptnegativelement verbunden sein. Der parallele Verlauf und die Verbindung können vorzugsweise entlang eines Abschnitts von 25% bis 95%, vorzugsweise 50% bis 90% des langgestreckten Verlaufs des Hauptnegativelements vorliegen.

Gemäß einer Ausführungsform der Erfindung können zwei in dem mittleren Profilband ausgebildete Hauptnegativelemente in ihrem langgestreckten Verlauf im Wesentlichen unter einem gemeinsamen geradlinigen Pfad verlaufen, ohne miteinander verbunden zu sein. Vorzugsweise erstrecken sich die zwei in dem mittleren Profilband ausgebildeten Hauptnegativelemente von gegenüberliegenden axialen Rändern des mittleren Profilbands kommend aufeinander zu und enden in einem gewissen Abstand zueinander. Der Abstand kann um die axiale Mitte des Profilbandes aber auch abseits davon zentriert sein; mit anderen Worten können sich die zwei Hauptnegativelemente in dem Maß ihrer Längserstreckung gleichen oder voneinander abweichen. Vorzugsweise können die zwei Hauptnegativelemente an den axialen Rändern des mittleren Profilbands in je eine das mittlere Profilband begrenzende Umfangsrille münden. Der Abstand entlang des gemeinsamen geradlinigen Pfads, unter dem die Hauptnegativelemente nicht verlaufen und voneinander getrennt sind, kann hierbei zwischen 10% und 60%, vorzugsweise 10% bis 40% der Länge des Pfads zwischen den beiden Umfangsrillen betragen. Dadurch, dass die Paare der Hauptnegativelemente nicht miteinander verbunden sind, kann eine höhere strukturelle Integrität in dem mittleren Profilband erreicht werden.

Die Hauptnegativelemente in dem mittleren Profilband sind vorzugsweise Einschnitte und/oder bestehen aus Kombinationen von Einschnitten mit weiteren Profilelementen. Typische Einschnitte können eine Breite von 0,5 mm bis 1,5 mm, vorzugsweise eine Breite von 0,5 mm bis 1 mm aufweisen und eine maximale Tiefe zwischen 3 mm und einer Tiefe von 0,5 mm weniger als der vollen Profiltiefe aufweisen. Durch die Kombination der Hauptnegativelemente im mittleren Profilband mit Oberflächenelementen gemäß einem oder mehreren der vorstehend und/oder nachstehend beschriebenen Ausführungsformen ist es möglich, eine effiziente Entwässerung und ein gutes Nasshandling bei hoher struktureller Integrität des mittleren Profilbands zu erreichen.

Das Gesamtnegativvolumen des Fahrzeugreifens im Bereich der Bodenaufstandsfläche beträgt vorzugsweise weniger als 24%. Dieser Wert errechnet sich über den Quotienten aus dem Gesamtnegativvolumen und dem Gesamtvolumen zwischen der Basisfläche und einer Grundfläche im Bereich der Bodenaufstandsfläche. Die Grundfläche hat entlang der Umfangsrichtung einen gleichbleibenden Verlauf. In axialen Bereichen zwischen zwei Umfangsrillen verläuft die Grundfläche auf dem Niveau des Rillengrundes der Umfangsrillen. In Bereichen zwischen einer Umfangsrille und einer Reifenschulter verläuft die Grundfläche je Punkt entlang der Querrichtung auf dem Niveau des Rillengrundes einer in Umfangsrichtung gemessen tiefsten Quer- oder Schrägrille. Eine maximale oder auch volle Profiltiefe auf dem Fahrzeugreifen ist vorzugsweise kleiner als 7,5 mm, wobei sich die Profiltiefe lokal senkrecht zur Basisfläche in den Fahrzeugreifen hinein erstreckt. Durch die Begrenzung des Negativvolumens und/oder der tiefsten Profiltiefe werden vorteilhafte Bedingungen zur Beschränkung einer Geräuschentwicklung am Reifen geschaffen. Die erfindungsgemäße Anordnung und Ausformung von Profilelementen kompensiert dabei die typischerweise negativen Auswirkungen eines kleinen Negativvolumens und/oder einer kleinen Profiltiefe auf die Nasseigenschaften des Fahrzeugreifens.

Der Fahrzeugreifen kann ein zweites schulterseitiges Profilband umfassen, sodass an beiden Schultern des Reifens je ein schulterseitiges Profilband ausgebildet ist. Hierbei erfüllt das zweite schulterseitige Profilband vorzugsweise die Bedingungen an das erste schulterseitige Profilband gemäß dem Hauptanspruch und wahlweise die Bedingungen gemäß vorstehender und/oder nachstehender Beschreibung. Abmessungen und Winkel können zwischen den beiden schulterseitigen Profilbändern variieren, sodass Anordnung und Ausformung der ersten und zweiten Hauptnegativelemente, beispielsweise gemäß den speziellen Anforderungen an eine Innenschulter bzw. Außenschulter, individuell angepasst werden können.

Der Fahrzeugreifen kann wenigstens zwei, vorzugsweise genau drei mittlere Profilbänder umfassen, die jeweils für sich genommen den Bedingungen des Hauptanspruchs und wahlweise den vorstehend und/oder nachstehend für das wenigstens eine mittlere Profiband beschriebenen Bedingungen genügen. Die Hauptnegativelemente eines einer inneren Schulter des Fahrzeugreifens näher gelegenen mittleren Profilbands können in ihrem langgestreckten Verlauf jeweils im Wesentlichen in einem kleineren Winkel zur Umfangsrichtung verlaufen als die Hauptnegativelemente eines von der inneren Schulter weiter beabstandeten mittleren Profilbands. In einer bevorzugten Ausführungsform umfasst der Fahrzeugreifen drei mittlere Profilbänder, wobei die Hauptnegativelemente in einem der äußeren Reifenschulter benachbarten mittleren Profilband in dem gleichen Winkel verlaufen wie die Hauptnegativelemente in einem axial zentralen mittleren Profilband und wobei die Hauptnegativelemente in einem der inneren Reifenschulter benachbarten mittleren Profilband im Wesentlichen in einem kleineren Winkel zur Umfangsrichtung verlaufen, als die Hauptnegativelemente der beiden anderen mittleren Profilbänder. Eine innere Reifenschulter weist, im Falle eines Einsatzes an einem Fahrzeug mit mehreren, quer zu einer Fahrtrichtung versetzt angeordneten Fahrzeugreifen, in Querrichtung nach innen, in Richtung eines in Querrichtung gegenüberliegend angeordneten Fahrzeugreifens.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine perspektivische Ansicht eines Fahrzeugreifens gemäß einer Ausführungsform der Erfindung,
Figur 2 schematisch und ausschnittsweise eine Draufsicht aus radialer Richtung auf einen Fahrzeugreifen gemäß einer Ausführungsform der Erfindung,
Figur 3a ein erstes schulterseitiges Hauptnegativelement gemäß der in Figur 2 gezeigten Ausführungsform im Schnitt entlang der Linie IIIa-IIIa,
Figur 3b ein in einem mittleren Profilband ausgebildetes Hauptnegativelement gemäß der in Figur 2 gezeigten Ausführungsform im Schnitt entlang der Linie IIIb-IIIb.

Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

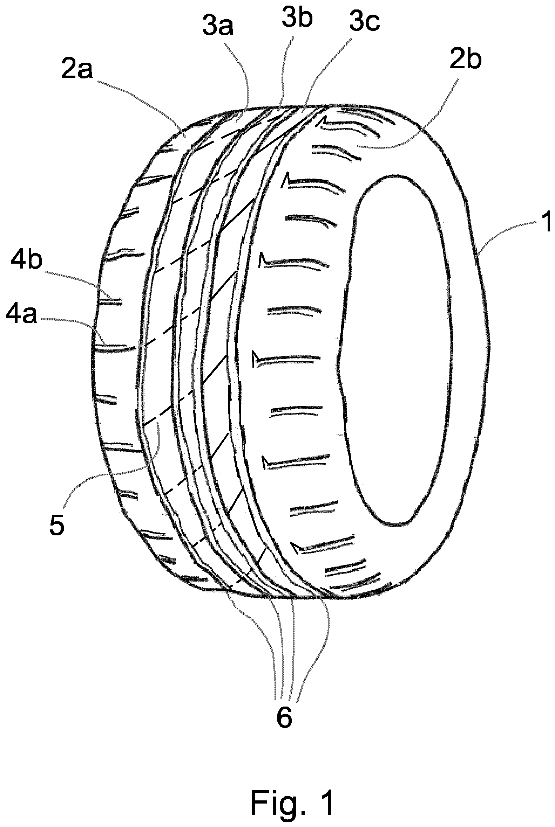

Figur 1 zeigt schematisch eine perspektivische Ansicht eines Fahrzeugreifens 1 gemäß einer Ausführungsform der Erfindung, mit einem ersten schulterseitigen Profilband 2a und einem zweiten schulterseitigen Profilband 2b, sowie drei mittleren Profilbändern 3a, 3b, 3c. Die Profilbänder 2a, 2b, 3a, 3b, 3c sind untereinander in Querrichtung durch Umfangsrillen 6 voneinander abgegrenzt. Auf den Profilbändern 2a, 2b, 3a, 3b, 3c sind Hauptnegativelemente 4a, 4b, 5 ausgebildet. Hierbei handelt es sich in den schulterseitigen Profilbändern 2a, 2b im Wesentlichen um nahe zur Querrichtung verlaufende Rillen 4a, 4b und in den mittleren Profilbändern 3a, 3b, 3c um im Wesentlichen in einem Winkel von nahe 45° zur Querrichtung verlaufende Einschnitte 5. Die in der Zeichnungsebene rechts dargestellte Reifenschulter, auf der das zweite schulterseitige Profilband 2b ausgebildet ist, kann vorzugsweise als innere Schulter fungieren.

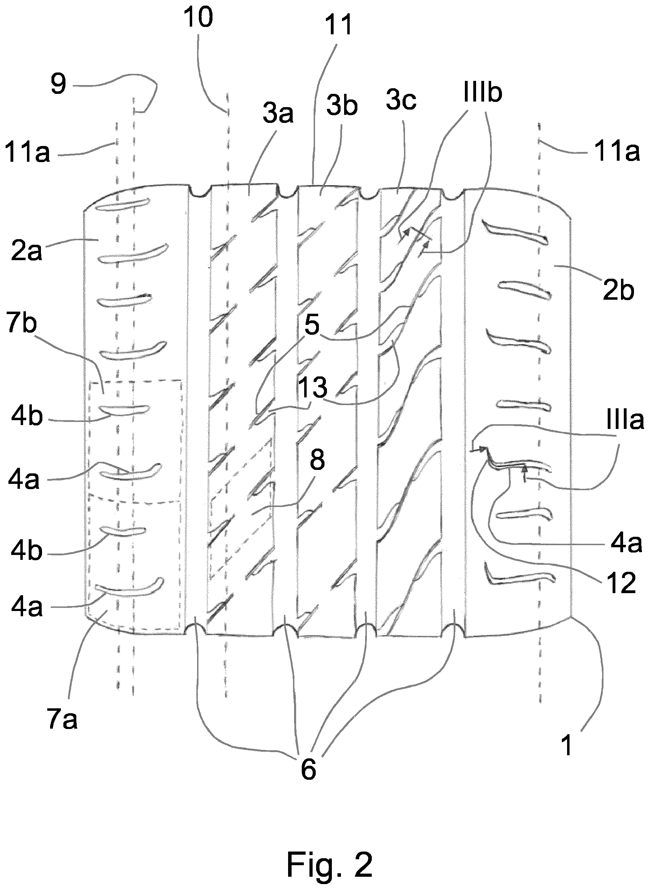

Figur 2 zeigt schematisch und ausschnittsweise eine Draufsicht aus radialer Richtung auf einen Fahrzeugreifen 1 gemäß einer Ausführungsform der Erfindung, wobei die Ausführungsform in den zu Figur 1 beschriebenen Grundmerkmalen der dort gezeigten Ausführungsform gleicht. Es sind die Grenzen zweier schulterseitiger Umfangsabschnitte 7a, 7b sowie eines mittleren Umfangsabschnitts 8 durch gestrichelte Linien dargestellt. Die Umfangsabschnitte 7a, 7b, 8 decken gemeinsam mit weiteren, nicht dargestellten Umfangsabschnitten die Profilbänder 2a, 2b, 3a, 3b, 3c vollständig ab.

Es sind eine erste imaginäre geschlossene Umfangslinie 9 und eine zweite imaginäre geschlossene Umfangslinie 10 durch gestrichelte Linien dargestellt. Entlang der ersten imaginären geschlossenen Umfangslinie 9 sind in dem ersten schulterseitigen Profilband 2a auf dem gemäß Figur 2 gezeigten Ausschnitt, aber auch entlang des gesamten Reifenumfangs, mehr Hauptnegativelemente 4a, 4b ausgebildet als entlang der zweiten imaginären geschlossenen Umfangslinie 10 Hauptnegativelemente 5 in dem mittleren Profilband 3a ausgebildet sind.

Die axialen Ränder 11a einer Bodenaufstandsfläche 11 sind durch gestrichelte Linien dargestellt. In den schulterseitigen Umfangsabschnitten 7a, 7b sind jeweils ein erstes und ein zweites Hauptnegativelement 4a, 4b ausgebildet, wobei sich die ersten Hauptnegativelemente 4a weiter in die Bodenaufstandsfläche 11 hineinerstrecken als die zweiten Hauptnegativelemente 4b. Außer den ersten und zweiten Hauptnegativelementen 4a, 4b ist in den schulterseitigen Umfangsabschnitten 7a, 7b im Bereich der Bodenaufstandsfläche 11 kein weiteres Negativelement vorgesehen, sodass die schulterseitigen Hauptnegativelemente 7a, 7b hier 100% des Gesamtnegativvolumens ausmachen. Jedoch könnten in dem schulterseitigen Umfangsabschnitt 7a axial außerhalb der Bodenaufstandsfläche 11 weitere Negativelemente wie beispielsweise aerodynamisch wirkende Dimplestrukturen vorgesehen werden. Auch innerhalb der Bodenaufstandsfläche 11 können zusätzliche Negativelemente vorgesehen werden, solange diese nicht die anspruchsgemäßen Grenzen betreffend den Anteil am Gesamtnegativvolumen des schulterseitigen Umfangsabschnitts 7a innerhalb der Bodenaufstandsfläche überschreiten. Die schulterseitigen Hauptnegativelemente 4a, 4b des ersten Umfangsabschnitts 7a sind in Umfangsrichtung etwas mehr als 50% der Umfangserstreckung des Umfangsabschnitts 7a voneinander beabstandet.

Die schulterseitigen Hauptnegativelemente 4a, 4b verlaufen im Wesentlichen in einem Winkel nahe 90° zur Umfangsrichtung. Auf dem zweiten schulterseitigen Profilband 2b sind erste Hauptnegativelemente 4a ausgebildet, die axial nach innen zu in Umfangsrichtung abknickenden Entwässerungsnuten 12 übergehen.

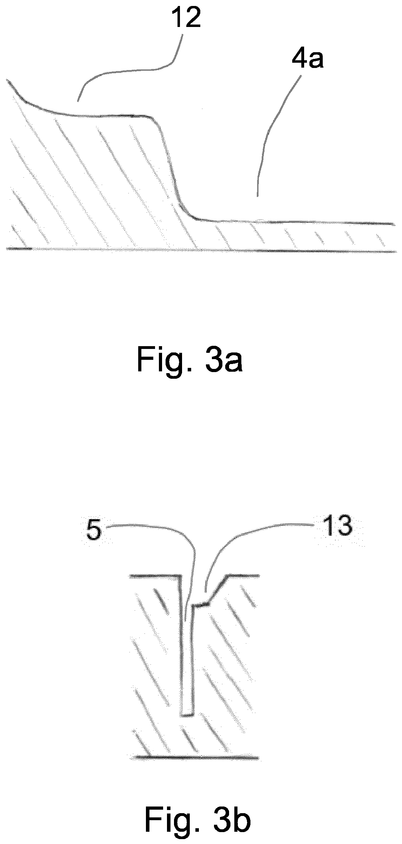

Die Entwässerungsnut 12 kann hierbei als Bestandteil des ersten Hauptnegativelements 4a betrachtet werden. Figur 3a zeigt einen Schnitt entlang der Linie IIIa-IIIa aus Figur 2. Demgemäß hat die Entwässerungsnut 12 eine geringere Tiefe als das erste Hauptnegativelement 4a. Durch Oberflächenelemente wie die Entwässerungsnut 12 kann das Nasshandling verbessert werden, ohne eine nennenswerte Vergrößerung des Gesamtnegativvolumens in Kauf zu nehmen. Gemäß alternativen Ausführungsformen können ähnliche Entwässerungsnuten 12 alternativ oder vorteilhafterweise zusätzlich auf dem ersten schulterseitigen Profilband 2a ausgebildet sein.

Die in Figur 2 gezeigten Hauptnegativelemente 5 in dem mittleren Profilband 3a teilen entlang der zweiten imaginären Umfangslinie 10 alle die gleiche Geometrie und Abmessung, sodass das mittlere Profilband 3a durch jedes der Hauptnegativelemente 5 über eine gleich große, in Umfangsrichtung auf eine zwischen der Radialrichtung und Axialrichtung aufgespannte Ebene projizierte Fläche unterbrochen wird.

Die Hauptnegativelemente 5 auf dem in der Figur 2 links dargestellten mittleren Profilband 3a und dem zentralen mittleren Profilband 3b verlaufen, je Profilband 3a, 3b, jeweils paarweise im Wesentlichen unter einem gemeinsamen geradlinigen Pfad und erstrecken sich von gegenüberliegenden axialen Rändern eines jeweiligen mittleren Profilbands 3a, 3b aus aufeinander zu, ohne dabei miteinander verbunden zu sein. Hierbei enden die zwei Hauptnegativelemente 5 eines Paars in einem um eine jeweilige axiale Mitte der mittleren Profilbänder 3a, 3b herum zentrierten Abstand zueinander. Gemäß alternativen Ausführungsformen können die Abstände jedoch auch abseits der Mitte zentriert sein, wobei eines der Hauptnegativelemente 5 sich insbesondere auch über die axiale Mitte eines mittleren Profilbands 3a, 3b hinaus erstrecken kann. Die Hauptnegativelemente 5 des in Figur 2 links dargestellten mittleren Profilbands 3a und des zentralen mittleren Profilbands 3b münden jeweils mit einem Ende in eine Umfangsrille 6. Die Hauptnegativelemente 5 des Rechts dargestellten mittleren Profilbands 3c erstrecken sich über die gesamte Breite des Profilbands 3c und münden zu beiden Enden in axial einander gegenüberliegend das mittlere Profilband 3c begrenzenden Umfangsrillen 6.

Die Hauptnegativelemente in den mittleren Profilbändern 3a, 3b, 3c verlaufen im Wesentlichen in einem Winkel von nahe 45° zur Umfangsrichtung. Die Hauptnegativelemente 5 in dem in der Figur 2 rechts dargestellten mittleren Profilband 3c schließen dabei in ihrem wesentlichen Verlauf einen kleineren Winkel mit der Umfangsrichtung ein als die Negativelemente 5 der beiden anderen mittleren Profilbänder 3a, 3b. Das rechts dargestellte mittlere Profilband 3c liegt benachbart zu einer inneren Schulter des Fahrzeugreifens 1.

Auf den mittleren Profilbändern 3a, 3b, 3c sind Oberflächenelemente 13 ausgebildet, die jeweils im Wesentlichen in einem Winkel nahe 45° zur Umfangsrichtung verlaufen. Die Oberflächenelemente 13 sind jeweils mit einem Hauptnegativelement 5 gepaart und entlang wenigstens eines Teils des langgestreckten Verlaufs der Hauptnegativelemente 5 im Wesentlichen parallel zu diesen verlaufend mit den Hauptnegativelementen 5 verbunden. Der parallele Verlauf und die Verbindung liegen gemäß der dargestellten Ausführungsform über Abschnitte von etwa 50% bis 90% des langgestreckten Verlaufs der Hauptnegativelemente 5 vor. Die Oberflächenelemente 13 in den mittleren Profilbändern 3a, 3b, 3c münden jeweils seitlich in Umfangsrillen 6 und nehmen in ihrer Breite mit zunehmendem Abstand von den Umfangsrillen 6 ab.

Figur 3b zeigt einen Schnitt entlang der Linie IIIb-IIIb aus Figur 2. Demgemäß ist das betreffende in dem mittleren Profilband 3c ausgebildete Hauptnegativelement 5 als vergleichsweise schmaler aber tiefer Einschnitt ausgestaltet, wobei das Oberflächenelement 13 deutlich flacher seitlich an des Hauptnegativelement 5 anschließt. Durch die dargestellte Kombination wird ein besonders vorteilhafter Kompromiss zwischen effektiver Entwässerung und einem geringen Negativvolumen erzielt.

### Bezugszeichenliste

- 1: Fahrzeugreifen
- 2a: erstes schulterseitiges Profilband
- 2b: zweites schulterseitiges Profilband
- 3a: einer äußeren Schulter benachbartes) mittleres Profilband
- 3b: (zentrales) mittleres Profilband
- 3c: (einer inneren Schulter benachbartes) mittleres Profilband
- 4a: erstes schulterseitiges Hauptnegativelement
- 4b: zweites schulterseitiges Hauptnegativelement
- 5: in mittlerem Profilband ausgebildetes) Hauptnegativelement
- 6: Umfangsrille
- 7a: erster schulterseitiger Umfangsabschnitt
- 7b: (zweiter) schulterseitiger Umfangsabschnitt
- 8: mittlerer Umfangsabschnitt
- 9: erste imaginäre geschlossene Umfangslinie
- 10: zweite imaginäre geschlossene Umfangslinie
- 11: Bodenaufstandsfläche
- 11a: axialer Rand der Bodenaufstandsfläche
- 12: Entwässerungsnut, Oberflächenelement
- 13: Oberflächenelement
- IIIa: Bezeichnung einer Schnittlinie in einem schulterseitigen Profilband
- IIIb: Bezeichnung einer Schnittlinie in einem mittleren Profilband

## Patentansprüche

1. Fahrzeugreifen (1) mit einem ersten schulterseitigen Profilband (2a) und wenigstens einem mittleren Profilband (3a, 3b, 3c), wobei das erste schulterseitige Profilband (2a) aus in Umfangsrichtung aufeinanderfolgenden schulterseitigen Umfangsabschnitten (7a, 7b) besteht und wobei das mittlere Profilband aus in Umfangsrichtung aufeinanderfolgenden mittleren Umfangsabschnitten (8) besteht, wobei in jedem Umfangsabschnitt wenigstens ein Hauptnegativelement (4a, 4b, 5) ausgebildet ist, wobei jedes Hauptnegativelement (4a, 4b, 5) einen langgestreckten Verlauf mit Quererstreckungsanteil aufweist, wobei das erste schulterseitige Profilband (2a) entlang einer ersten imaginären geschlossenen Umfangslinie (9) mehr Hauptnegativelemente (4a, 4b) umfasst als das mittlere Profilband (3a, 3b, 3c) entlang einer zweiten imaginären geschlossenen Umfangslinie (10),
**dadurch gekennzeichnet,**
**dass** ein erster schulterseitiger Umfangsabschnitt (7a) ein erstes und ein zweites schulterseitiges Hauptnegativelement (4a, 4b) umfasst, wobei sich das erste schulterseitige Hauptnegativelement (4a) axial von außen kommend weiter in eine Bodenaufstandsfläche (11) des Fahrzeugreifens (1) hinein erstreckt als das zweite schulterseitige Hauptnegativelement (4b) und wobei das erste und das zweite schulterseitige Hauptnegativelement (4a, 4b) zusammen wenigstens 85% eines Gesamtnegativvolumens des ersten schulterseitigen Umfangabschnitts (7a) im Bereich der Bodenaufstandsfläche (11) ausmachen.

2. Fahrzeugreifen gemäß Anspruch 1, **dadurch gekennzeichnet, dass** das erste und das zweite schulterseitige Hauptnegativelement (4a, 4b) zusammen wenigstens 95% des Gesamtnegativvolumens des ersten schulterseitigen Umfangabschnitts (7a) im Bereich der Bodenaufstandsfläche (11) ausmachen

3. Fahrzeugreifen gemäß einem der Ansprüche 1 oder 2, **dadurch gekennzeichnet, dass** alle schulterseitigen Umfangsabschnitte (7a, 7b) des ersten schulterseitigen Profilbands (2a) die Bedingungen an den ersten schulterseitigen Umfangsabschnitt (7a) erfüllen, wobei insbesondere die Abmessungen in Umfangsrichtung je nach Umfangsabschnitt (7a, 7b) im Rahmen einer geeigneten Pitchfolge variieren können.

4. Fahrzeugreifen gemäß einem der Ansprüche 1 bis 3, **dadurch gekennzeichnet, dass** die beiden schulterseitigen Hauptnegativelemente (4a, 4b) in Umfangsrichtung zwischen 30% und 70%, vorzugsweise zwischen 40% und 60% einer Umfangserstreckung des ersten schulterseitigen Umfangsabschnitts (7a) voneinander beabstandet sind.

5. Fahrzeugreifen gemäß einem der Ansprüche 1 bis 4, **dadurch gekennzeichnet, dass** das erste und zweite Hauptnegativelement (4a, 4b) in ihrem langgestreckten Verlauf jeweils im Wesentlichen in einem Winkel zwischen 70° und 110° zur Umfangsrichtung verlaufen.

6. Fahrzeugreifen gemäß einem der Ansprüche 1 bis 5, **dadurch gekennzeichnet, dass** sich Projektionen der entlang der zweiten imaginären geschlossenen Umfangslinie (10) gelegenen, in dem mittleren Profilband (3a, 3b, 3c) ausgebildeten Hauptnegativelemente (5) auf von der Axialrichtung und der Radialrichtung aufgespannte Flächen untereinander, gemessen an einem gleichgroßen oder größeren Flächeninhalt, um weniger als 34% unterscheiden.

7. Fahrzeugreifen gemäß einem der Ansprüche 1 bis 6, **dadurch gekennzeichnet, dass** die in dem mittleren Profilband (3a, 3b, 3c) ausgebildeten Hauptnegativelemente (5) in ihrem langgestreckten Verlauf jeweils im Wesentlichen in einem Winkel von maximal 50° zur Umfangsrichtung verlaufen.

8. Fahrzeugreifen gemäß einem der Ansprüche 1 bis 7, **dadurch gekennzeichnet, dass** zwei in dem mittleren Profilband (3a, 3b, 3c) ausgebildete Hauptnegativelemente (5) in ihrem langgestreckten Verlauf im Wesentlichen unter einem gemeinsamen geradlinigen Pfad verlaufen, jedoch nicht miteinander verbunden sind, wobei die zwei in dem mittleren Profilband (3a, 3b, 3c) ausgebildeten Hauptnegativelemente sich vorzugsweise von gegenüberliegenden axialen Rändern des mittleren Profilbands (3a, 3b, 3c) aus aufeinander zu erstrecken und in einem Abstand zueinander enden.

9. Fahrzeugreifen gemäß einem der Ansprüche 1 bis 8, **dadurch gekennzeichnet, dass** auf dem schulterseitigen Profilband (2a) und/oder auf dem mittleren Profilband (3a, 3b, 3c) Oberflächenelemente (12, 13) ausgebildet sind, wobei die Oberflächenelemente (12, 13) eine Tiefe von maximal 2,5 mm aufweisen und vorzugsweise in ihrer Gesamtheit unter einem Winkel von maximal 50° zur Umfangsrichtung verlaufen.

10. Fahrzeugreifen gemäß Anspruch 9, **dadurch gekennzeichnet, dass** das mittlere Profilband (3a, 3b, 3c) axial von wenigstens einer Umfangsrille (6) begrenzt ist, wobei wenigstens ein in dem mittleren Profilband ausgebildetes Oberflächenelement (13) seitlich in die Umfangsrille (6) mündet und in seiner Breite mit zunehmendem Abstand von der Umfangsrille (6) abnimmt.

11. Fahrzeugreifen gemäß einem der Ansprüche 9 oder 10, **dadurch gekennzeichnet, dass** wenigstens ein in dem mittleren Profilband (3a, 3b, 3c) ausgebildetes Oberflächenelement (13) mit jeweils einem Hauptnegativelement (5) gepaart ist, wobei das Oberflächenelement (13) entlang wenigstens eines Teils des langgestreckten Verlaufs des Hauptnegativelements (5) im Wesentlichen parallel zu diesem verlaufend mit dem Hauptnegativelement (5) verbunden ist, wobei das Oberflächenelement (13) vorzugsweise entlang eines Abschnitts von 25% bis 95%, weiter vorzugsweise 50% bis 90% des langgestreckten Verlaufs des Hauptnegativelements (5) im Wesentlichen parallel zu diesem verlaufend mit dem Hauptnegativelement (5) verbunden ist.

12. Fahrzeugreifen gemäß einem der Ansprüche 1 bis 11, **dadurch gekennzeichnet, dass** das Gesamtnegativvolumen des Fahrzeugreifens (1) im Bereich der Bodenaufstandsfläche (11) weniger als 24% beträgt und/oder dass eine maximale Profiltiefe auf dem Fahrzeugreifen (1) kleiner als 7,5 mm ist.

13. Fahrzeugreifen gemäß einem der Ansprüche 1 bis 12, **dadurch gekennzeichnet, dass** der Fahrzeugreifen (1) ein zweites schulterseitiges Profilband (2b) umfasst, sodass an beiden Schultern des Fahrzeugreifens (1) je ein schulterseitiges Profilband (2a, 2b) ausgebildet ist, wobei das zweite schulterseitige Profilband (2b) die Bedingungen an das erste schulterseitige Profilband (2a) erfüllt, wobei die Abmessungen und Winkel zwischen den beiden schulterseitigen Profilbändern (2a, 2b) variieren können.

14. Fahrzeugreifen gemäß einem der Ansprüche 1 bis 13, **dadurch gekennzeichnet, dass** der Fahrzeugreifen (1) wenigstens zwei, vorzugsweise genau drei mittlere Profilbänder (3a, 3b, 3c) umfasst, die jeweils für sich genommen den Bedingungen eines oder mehrerer der vorstehenden Ansprüche genügen.

15. Fahrzeugreifen gemäß Anspruch 14, **dadurch gekennzeichnet, dass** die Hauptnegativelemente (5) eines einer inneren Schulter des Fahrzeugreifens (1) näher gelegenen mittleren Profilbands (3c) in ihrem langgestreckten Verlauf jeweils im Wesentlichen in einem kleineren Winkel zur Umfangsrichtung verlaufen als die Hauptnegativelemente (5) eines von der inneren Schulter weiter beabstandeten mittleren Profilbands (3a, 3b).
